(19) Europäisches Patentamt
European Patent Office
Office européen des brevets

(11) **EP 4 231 052 B1**

## (12) EUROPÄISCHE PATENTSCHRIFT

(45) Veröffentlichungstag und Bekanntmachung des Hinweises auf die Patenterteilung:
**13.05.2026 Patentblatt 2026/20**

(21) Anmeldenummer: **23157402.1**

(22) Anmeldetag: **17.02.2023**

(51) Internationale Patentklassifikation (IPC):
*G01S 13/90* $^{(2006.01)}$ *G01S 7/40* $^{(2006.01)}$
*G01S 13/89* $^{(2006.01)}$

(52) Gemeinsame Patentklassifikation (CPC):
**G01S 7/4004; G01S 13/89**

(54) **VORRICHTUNG UND VERFAHREN ZUM KALIBRIEREN ZUMINDEST EINES PARAMETERS EINES RADARSYSTEMS UND MOBILES RADARSYSTEM**

DEVICE AND METHOD FOR CALIBRATING AT LEAST ONE PARAMETER OF A RADAR SYSTEM, AND MOBILE RADAR SYSTEM

DISPOSITIF ET PROCÉDÉ D'ÉTALONNAGE D'AU MOINS UN PARAMÈTRE D'UN SYSTÈME RADAR ET SYSTÈME RADAR MOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.02.2022 DE 102022103958**

(43) Veröffentlichungstag der Anmeldung:
**23.08.2023 Patentblatt 2023/34**

(73) Patentinhaber: **Fraunhofer-Gesellschaft zur Förderung
der angewandten Forschung e.V.
80686 München (DE)**

(72) Erfinder: **PANHUBER, Reinhard
53343 Wachtberg (DE)**

(74) Vertreter: **2SPL Patentanwälte PartG mbB
Landaubogen 3
81373 München (DE)**

(56) Entgegenhaltungen:
**EP-A1- 3 364 212**

- **YASIN MUBASHAR ET AL: "A subaperture based approach for SAR moving target imaging by low-rank and sparse decomposition", PROCEEDINGS OF SPIE; [PROCEEDINGS OF SPIE ISSN 0277-786X VOLUME 10524], SPIE, US, vol. 10647, 27 April 2018 (2018-04-27), pages 106470K - 106470K, XP060104054, ISBN: 978-1-5106-1533-5, DOI: 10.1117/12.2304982**
- **BENJAMIN RECHT ET AL: "Guaranteed Minimum-Rank Solutions of Linear Matrix Equations via Nuclear Norm Minimization", ARXIV.ORG, CORNELL UNIVERSITY LIBRARY, 201 OLIN LIBRARY CORNELL UNIVERSITY ITHACA, NY 14853, 28 June 2007 (2007-06-28), XP080291298, DOI: 10.1137/070697835**

**Beschreibung**

**Technisches Gebiet**

Ausführungsbeispiele befassen sich mit der Kalibration eines oder mehrerer Parameter eines Radarsystems und mit einem mobilen Radarsystem.

**Hintergrund**

Verfahren zur Kalibration eines oder mehrerer Parameter eines Radarsystems werden beispielsweise zur robusten Schätzung von Flug- und Kalibrationsparametern aus Clutter-Messdaten bei bewegten Radarsystemen verwendet. Ein Beispiel eines bewegten Radarsystems ist ein an einem Flugzeug angebrachtes Radar zur Bodenbeobachtung, das sowohl bewegliche Ziele als auch die Landschaft mit unbeweglichen Zielen als statischen Hintergrund misst, wobei der statische Hintergrund auch als Clutter bezeichnet wird.

Um Ziele erfolgreich detektieren zu können, benötigen die verwendeten Signalverarbeitungsalgorithmen kalibrierte Messdaten. Zum Erzeugen der kalibrierten Messdaten werden präzise Informationen über die Eigenschaften des Radarsystems und der dieses tragenden Plattform benötigt. Diese werden aus einer Kalibration des Systems gewonnen. Durch die Kalibration werden diverse Parameter (System- und Prozessparameter) bestimmt, beispielsweise die aktuelle Fluggeschwindigkeit, Gier-, Nick- und Rollwinkel der Plattform, die präzise Kenntnis der Lage der Phasenzentren der Antennen, und eventuelle weitere Parameter für einen Kanalabgleich. Der Gier-, Nick- und Rollwinkel der Plattform beschreibt die relative Orientierung zwischen Radarszene und Radarsystem.

Separates Messequipment, welches einen Teil dieser Parameter liefern kann, wie etwa ein Trägheitsnavigationssystem (Inertial Measurement Unit - IMU) für die Langeinformationen der Plattform, liefern jedoch Offset-Fehler behaftete Daten (verursacht z. B. durch montagebedingte Ausrichtungsfehler). Andere möglicherweise erforderlichen Parameter wie etwa die Lage der Antennen-Phasenzentren können herkömmlich nur mit hohem Aufwand und direkt am Boden bestimmt werden.

Solche Parameter werden daher günstigerweise mittels Messdaten aus der zu vermessenden Szene geschätzt. Dies erlaubt auch eine Neukalibrierung des Radarsystems während des Einsatzes. Die geschätzten Parameter können auch für weiter fortgeschrittene Signalverarbeitungsalgorithmen über die Anwendung der Kalibration hinaus eingesetzt werden. Diese sind üblicherweise modellbasiert, womit deren Leistung von der Qualität der geschätzten Parameter abhängt.

Radar-Szenen sind äußerst vielfältig. Es werden beispielsweise Wiesen, Felder, Wälder, Seen, Meer, Städte, Straßen, etc. mit und ohne bewegte Ziele und jede daraus beliebige Kombination abgebildet. Aufgrund der hohen Bandbreite möglicher Radarszenen ist ein robustes Kalibrationsverfahren zum Bestimmen der Parameter erforderlich.

Es existiert eine Vielzahl an Verfahren zur Schätzung von Parametern. Diese unterscheiden sich unter anderem durch die verfügbaren Messdaten für deren Bestimmung. Ein Beispiel eines direkten Verfahrens benutzt ein einzelnes oder mehrere bekannte Ziele (zumeist Punktstreuer) und passt in einem direkten Minimierungsverfahren, die benötigen Parameter mittels eines Modells an, sodass das modellierte Signal dem empfangenen bestmöglich entspricht. Dies erlaubt eine absolute Kalibrierung des Radarsystems. Sind keine bekannten Ziele vorhanden, müssen Messungen von unbekannten Radarszenen verwendet werden. Eine absolute Kalibration ist in diesem Fall nicht möglich. Stattdessen dient in herkömmlichen Verfahren ein Antennenkanal und die Plattform selbst als Referenzobjekt. Die Schätzung der Parameter erfolgt dann beispielsweise mittels iterativer Verfahren oder über Näherungen. Voraussetzungen für eine erfolgreiche Kalibrierung sind jedoch auch hier Messdaten geeigneter Szenen. Insbesondere vorhandene Bewegtziele beeinträchtigen die Qualität der derart geschätzten Parameter.

Die Veröffentlichung EP 3 364 212 A1 bezieht sich auf ein Verfahren zur rechnergestützten Verarbeitung von SAR-Rohdaten, das Radarechos vom Boden umfasst, die die Antwort auf Radarimpulse sind, die von Antennenelementen eines Radarsensors auf mindestens einem Flugobjekt übertragen wurden, das sich in einer Azimutrichtung über dem Boden bewegt, und bei dem die Radarechos von Antennenelementen des Radar-Sensors empfangen wurden, wobei die SAR-Rohdaten Radarechos enthalten, die von Referenzzielen mit bekannten Radarquerschnitten und -positionen am Boden stammen und durch Datenerfassungen für mehrere Kanäle dargestellt werden, wobei sich jeder Kanal auf Radarimpulse bezieht, die von einem bestimmten Antennenelement gesendet werden und auf Radarechos, die von einem bestimmten Antennenelement empfangen wurden.

Folglich besteht ein Bedarf an einem verbesserten Ansatz zum Kalibrieren eines Parameters eines Radarsystems.

Zusammenfassung

Aufgabe der Erfindung ist es, eine Kalibration ohne Referenzobjekt durchzuführen, wie es im Stand der Technik beispielsweise ein bekanntes Ziel oder ein ausgewählter Antennenkanal erfordert. Dadurch wird die Kalibration robuster, etwa für den Fall, dass im Referenzobjekt selbst ein Fehler auftritt. Ferner kann die Kalibration mit beliebigen Radarszenen durchgeführt werden, ohne dass diese ein besonderes Kriterium erfüllen müssen, welches sie für eine herkömmliche Kalibration geeignet erscheinen lässt. Zur Lösung dieser Aufgabe sind ein Verfahren und eine Vorrichtung zur Kalibration eines Parameters eines Radarsystems gemäß den Ansprüchen 1 und 7 geschaffen.

**Figurenkurzbeschreibung**

Einige Beispiele von Vorrichtungen und/oder Verfahren werden nachfolgend bezugnehmend auf die beiliegenden Figuren lediglich beispielhaft näher erläutert. Es zeigen:

Fig. 1 ein Flussdiagramm eines Verfahrens zum Kalibrieren zumindest eines Parameters eines Radarsystems;
Fig. 2 ein Beispiel einer Darstellung der Mehrzahl von Messungen und des Effekts einer Optimierung von Parametern;
Fig. 3 eine Illustration unvollständiger Messungen;
Fig. 4 eine schematische Darstellung einer Vorrichtung zum Kalibrieren zumindest eines Parameters eines Radarsystems; und
Fig. 5 eine schematische Darstellung eines Ausführungsbeispiels eines Luftfahrzeugs mit einem mobilen Radargerät.

**Beschreibung**

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

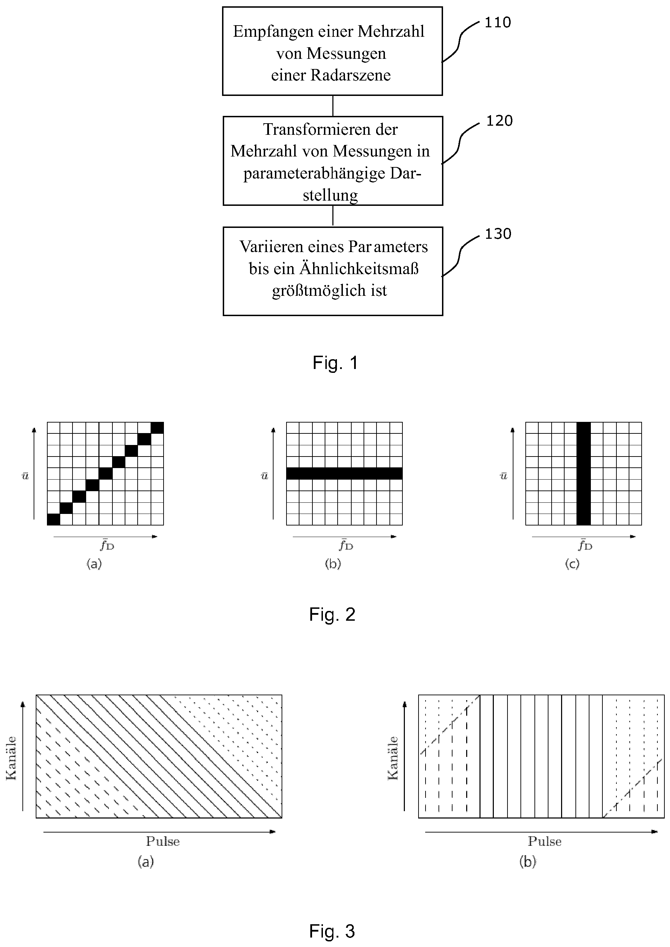

Fig. 1 zeigt ein Flussdiagramm eines Verfahrens zum Kalibrieren zumindest eines Parameters eines Radarsystems. Dabei wird davon ausgegangen, dass eine Radarszene zunächst von einem Radarsystem mehrfach aufgenommen wurde, dass also eine Mehrzahl von Messungen der Radarszene von einem Radarsystem vorliegen. Das Verfahren führt eine Kalibration unter Verwendung der derart gewonnenen Messungen durch. Beispielsweise kann eine Radarszene von einem mobilen Radarsystem aufgenommen werden, das an einem fliegenden Objekt, beispielsweise einem Flugzeug, einem Hubschrauber, einem Satelliten, einer Drohne oder einem anderen bemannten oder unbemannten Luftfahrzeug befestigt ist. In derartigen Radarsystemen können beispielsweise ein oder mehrere unabhängige Sender in Verbindung mit einem oder mehreren unabhängigen Empfängern verwendet werden. Beispielsweise kann jede der Mehrzahl von einzelnen Messungen mittels eines Phased-Array Radarsystems vorgenommen werden, bei dem mehrere Sender und/oder Empfänger phasengesteuert kooperativ betrieben werden, sodass das System nicht nur auf die Entfernung, sondern auch auf die Richtung, aus der ein Radarecho empfangen wurde, sensitiv ist.

Für das Kalibrationsverfahren werden zunächst eine Mehrzahl von Messungen einer Radarszene empfangen 110. Die Mehrzahl von Messungen wird dann in eine von dem mittels der Kalibration zu bestimmenden Parameter abhängige Darstellung transformiert 120. Der Parameter wird dann so lange variiert 130, bis ein Ähnlichkeitsmaß zumindest eines Messwertes zwischen der Mehrzahl von Messungen größtmöglich ist.

Wie nachfolgend beschrieben werden wird, ist die Kalibration dadurch robust und kann mit beliebigen Radarszenen durchgeführt werden, ohne dass diese einer besonderen Anforderung genügen müssten. Eine Radarszene kann man konzeptionell in zwei Komponenten unterteilen. Die Clutter-Szene ist derjenige Anteil der Radar Szene, der statisch ist, und die man demzufolge auch als Hintergrund einer Szene mit mehreren bewegten Zielen verstehen kann. Die bewegten Ziele sind die andere Komponente und häufig ist es eine Zielsetzung, die bewegten Ziele zuverlässig vor dem Hintergrund zu erkennen und zu verfolgen.

In den folgenden Abschnitten wird ein konkretes Beispiel ausgeführt, wie eine von einem Parameter abhängige Darstellung gewählt werden kann und welches Ähnlichkeitsmaß verwendet werden könnte, um die Kalibration durchzuführen. Dies ist jedoch nicht so zu verstehen, dass dies die einzige mögliche Implementierung für den Ansatz wäre, eine von einem oder mehreren Parametern abhängige Darstellung einer Mehrzahl von Messungen einer Radarszene zu verwenden und basierend auf dieser Darstellung eine Optimierung durchzuführen.

Bei dem konkreten Ausführungsbeispiel wird aus den gemessenen Daten mittels eines Modells, welches die zu kalibrierenden Parameter enthält, eine Matrix niedrigen Ranges geformt. Das im Folgenden beschriebene Modell ist somit eine von den Parametern abhängige Darstellung der Messergebnisse und die Matrix eine mögliche Veranschaulichung dieses Modells. Als Maß des Ranges dient im folgenden Beispiel die Nuklearnorm, welche für perfekt geschätzte Parameter minimal wird. Die Nuklearnorm ist also ein mögliches Ähnlichkeitsmaß zur Bewertung des Erfolges der Optimierung. Diese Optimierung gelingt, da alle Messungen die gleiche Clutter-Szene abbilden. Die Clutter-Szene ist derjenige Anteil der Radar Szene, der statisch ist, und die man demzufolge auch als Hintergrund einer Szene mit bewegten Zielen verstehen kann.

Zur Veranschaulichung des Prinzips und zur Vermeidung unnötiger Komplexität verwendet das folgende Beispiel ein stark vereinfachtes Szenario mit nur einem Parameter. Dieses lässt sich aber jederzeit auf komplexere Fälle mit mehreren zu schätzenden Parametern verallgemeinern.

Für das Radarsystem wird ebenso vereinfachend ein uniformes lineares Array von Antennen angenommen (uniform linear array - ULA), mit Kanalpositionen $\vec{p}_{n_{rx}} = [n_{rx}d\ 0\ 0]^T$ und Kanalabstand $d = \lambda_c/2$, wobei $\lambda_c$ die Radarwellenlänge bezeichnet. Der mittels der Kalibration zu schätzende Parameter sei die aktuelle Geschwindigkeit $v_p$ der Plattform, die das mobile Radargerät bzw. das Radarsystem trägt, also die Relativgeschwindigkeit zwischen Radarszene und mobilem Radargerät. Es sind $N_r$ die Anzahl der Entfernungsintervalle (range gates), die das Radarsystem auflöst, $N_{rx}$ die Anzahl der Kanäle, $N_p$ die Anzahl der Pulse, $N_t$ die Anzahl der Ziele und $m = N_{rx}N_p$ die Anzahl der räumlich-zeitlichen Messungen. Innerhalb eines Kohärenten Arbeitszyklus (coherent processing interval - CPI) liefert das Radarsystem Messungen, die beispielsweis in Form eines Datenwürfels $Y_W \in \mathbb{C}^{N_r x N_{rx} x N_p}$ organisiert werden können. Des Weiteren wird für das Beispiel angenommen, dass auf die Entfernungsdimension bereits eine Pulskompression angewendet wurde. Für den im Folgenden beschriebenen Algorithmus wird aus dem Datenwürfel lediglich die Information eines einzelnen der Entfernungsintervalle $N_{rx}$ verwendet, die sich beispielsweise in Form einer Messmatrix $Y \in \mathbb{C}^{N_{rx} x N_p}$ darstellen lässt. Das Kalibrationsverfahren umfasst also das Auswählen eines einzigen Entfernungsintervalls einer Vielzahl von Entfernungsintervallen der Messungen. Durch diese erhebliche Reduktion der Datenmenge lässt sich die Berechnungszeit verringern, was es beispielsweise möglich machen kann, die Kalibration des Radargerätes auch im Einsatz und mit reduzierter Rechenkapazität mehrfach oder sogar regelmäßig durchzuführen.

In vektorisierter Form (mit übereinander gestapelten Spalten der Matrixdarstellung) lässt sich die Messmatrix darstellen als

$$vec(Y) = y = \sum_{n_t=0}^{N_t-1} y_{t,n_t} + y_c(p) + n$$

wobei $y_t \in \mathbb{C}^m$ das Signalmodell eines einzelnen bewegten Zieles, $y_c(p) \in \mathbb{C}^m$ das Signalmodell des Clutters, $p \in \mathbb{R}^{N_{par}}$ den gesuchte Parametervektor und $n \in \mathbb{C}^m$ i. i. d. weißes gaußsches Rauschen bezeichnet. Es wird weiter angenommen, dass die Anzahl der vorhandenen Bewegtziele in einem einzigen Entfernungsintervall sehr viel kleiner ist als die Anzahl der Messungen, dass also $N_t \ll m$. Das Signalmodell eines einzelnen bewegten Zieles kann angegeben werden als

$$y_{t,n_t} = x_{t,n_t} g\left(\overline{u}_{t,n_t}, \overline{f}_{Dt,n_t}\right),$$

wobei $x_t \in \mathbb{C}$ eine komplexe Amplitude und $g(\overline{u}, \overline{f}_D) \in \mathbb{C}^m$ einen Raum-Zeit-Messvektor bezeichnet. Die zugehörigen Parameter sind der normierte Richtungskosinus zum bewegten Ziel

$$\overline{u} = u\overline{d} \in \mathbb{R}$$

mit $\overline{d} = d/\lambda_c$ der normierten Distanz zwischen den Kanälen, $\lambda_c$ der Radarwellenlänge und $\overline{f}_D$ die zugehörige normierte Dopplerfrequenz

$$\overline{f}_D = f_D / f_p$$

mit der Pulsrate $f_p$ der Mehrzahl von Radarpulsen innerhalb eines CPI. Der Raum-Zeit-Messvektor ist

$$g(\overline{u}, \overline{f}_D) = b(\overline{f}_D) \otimes a(\overline{u}),$$

mit $\otimes$ dem Kronecker-Produkt. Dabei ist

$$a(\overline{u}) = \left[e^{j2\pi n_{rx}\overline{u}}\right]_{n_{rx}=0}^{N_{rx}-1} \in \mathbb{C}^{N_{rx}}$$

der räumliche

$$b(\overline{f}_D) = \left[e^{j\pi n_p \overline{f}_D}\right]_{n_p=0}^{N_p-1} \in \mathbb{C}^{N_p}$$

der zeitliche Messvektor. In Matrixform lässt sich die zugehörige Messmatrix angeben als

$$Y_{t,n_t} = x_{t,n_t} a(\overline{u}_{t,n_t}) b^T\left(\overline{f}_{Dt,n_t}\right),$$

wobei $.^T$ den transponierten Vektor bezeichnet. Diskretisiert man die Messungen der Radar-Szene in der normierten Winkel-Doppler Domäne in $N_u \in 2\mathbb{N}$ und $N_D \in 2\mathbb{N}$ Winkel- und Dopplerbins, lassen sich alle Bewegtziele $N_t$ kompakt in einer Messmatrix angeben als

$$\sum_{n_t=0}^{N_t-1} Y_{t,n_t} = AX_t B^T$$

wobei $X_t \in \mathbb{C}^{N_u \times N_D}$ die Radar-Szene bezeichnet, in der alle $N_t$ Ziele entsprechend ihrer Richtungskosinusse und Doppler eingetragen sind und

$$A = \left[a(n_u/N_u)\right]_{n_u=-N_u/2}^{N_u/2-1} \in \mathbb{C}^{N_{rx} \times N_u}$$

$$B = \left[b(n_D/N_D)\right]_{n_D=-N_D/2}^{N_D/2-1} \in \mathbb{C}^{N_p \times N_D}$$

die zugehörigen Raum- und Zeit-Messmatrizen. Bei Vernachlässigung von Roll-, Nick-, und Gierwinkel gilt für Cluttersignale die Beziehung

$$\overline{f}_D(\overline{u}) = \frac{2v_p}{df_p}\overline{u}$$

Diese ist eine Funktion des gesuchten Parameters $v_p$. Durch Verwendung dieser Beziehung kann die Mehrzahl von Messungen in eine von dem zu findenden Parameter abhängige Darstellung transformiert werden.

Das Cluttersignal kann als Superposition der Beiträge aus allen Richtungen angegeben werden als

$$y_c(v_p) = \int_{-1/2}^{1/2} x_c(\overline{u})\, g\left(\overline{u}, \overline{f}_D(\overline{u};\, v_p)\right) d\overline{u}$$

$$= \int_{-1/2}^{1/2} x_c(\overline{u})\, a\,(\overline{u})\, b^T\left(\overline{f}_D(\overline{u};\, v_p)\right) d\overline{u}$$

wobei $x_c(\overline{u}) \in \mathbb{C}$ eine zufallsverteilte Clutter-Patch Amplitude bezeichnet. Dieses Integral lässt sich als diskrete Summe approximieren als

$$Y_c(v_p) \simeq AX_c(v_p)B^T.$$

Aufgrund des beschränkten Auflösungsvermögens des Radarsystems in Winkel und Dopplerfrequenz erscheinen die vom Cluttersignal hervorgerufenen Einträge in $X_c \in \mathbb{C}^{N_u x N_D}$ nicht in dünn besetzter Form, sondern als ein Band (Clutter Ridge) mit davon abgehenden schwächer werdenden Leakage-Einträgen.

Das Signalmodel mit den Komponenten bzw. Signalanteilen Clutter und Bewegtziele kann für alle damit auch dargestellt werden als

$$Y = A\left(X_t + X_c(v_p)\right)B^T + N$$

Wobei $N \in \mathbb{C}^{N_r x x N_p}$ eine i. i. d. Rauschmatrix ist. Mittels einer geeigneten Transformation lässt sich die Matrix $X_c(v_p)$, die den Clutter Anteil enthält, zu einer Matrix niedrigen Ranges umformen.

Hat die derart umgeformte Matrix niedrigen Rang bedeutet dies, es gibt eine minimale Zahl linear unabhängiger Spalten- oder Zeilenvektoren oder im Umkehrschluss, dass die einzelnen Kanäle des Radarsystems maximal zueinander korreliert sind, was wiederum genau dann der Fall ist, wenn das System perfekt kalibriert ist. Als Kriterium dafür, ob die Matrix niedrigen Rang hat, kann beispielsweis die robuster Nuklearnorm gewählt werden. Eine Matrix minimalen Ranges erreicht man, wenn nur eine Zeile oder eine Spalte der Matrix gefüllt ist. Dies ist allein aufgrund der Tatsache, dass die Matrix das genannte Band an Einträgen durch den Clutter hat, im Allgemeinen nicht erreichbar. Dennoch kann der Rang der Matrix dadurch minimiert werden, dass die Einträge in einer der Dimensionen verschoben werden, bis die minimale Nuklearnorm den minimal möglichen Rang anzeigt. In der in Fig. 2 gezeigten Repräsentation der Messungen in Matrixform entspricht die erste Dimension entlang der x-Achse (die verschiedenen Spalten der Matrix) einer Geschwindigkeitsinformation der Messungen, im besonderen Fall der normierten Dopplerfrequenz. Die zweite Dimension in der y-Richtung (die verschiedenen Zeilen der Matrix) entspricht einer Richtungsinformation der Messungen, im besonderen Fall dem normierten Richtungskosinus. Möglich wäre hier auch eine andere Repräsentation der Messungen, in der eine der Dimension einer Entfernungsinformation der Messungen entspräche. Prinzipiell sind Darstellungen verwendbar, in der eine beliebige Kombination aus Richtungsinformation der Messungen, Geschwindigkeitsinformation der Messungen und Entfernungsinformation der Messungen verwendet wird.

Für den in Fig. 2a gezeigten Fall der Darstellung der Messungen besteht die Möglichkeit, die Clutter-Ridge in der Radar-Szene entweder auf $\overline{u} = 0$ (Fig. 2b)) oder $\overline{f}_D = 0$ (Fig. 2c) zu fokussieren bzw. sie in einer der Dimensionen auf einen anderen Wert als 0 zu fokussieren. Für die verbesserten Darstellungen der Fig. 2b und 2c wurde der Parameter während der Minimierung so lange variiert, bis die auf dem verbesserten Parameter basierende verbesserten Darstellung der Mehrzahl von Messungen eine minimale Nuklearnorm hat.

Zur Fokussierung kann beispielsweise die Verschiebeeigenschaft der Fouriertransformation

$$\mathcal{F}\{x(t-\tau)\} = X(f)e^{-j2\pi f\tau}$$

genutzt werden, welche einer zyklischen Verschiebung entspricht. Die nötigen Verschiebungen sind abhängig von $v_p$ und ergeben sich zu

$$\triangle \overline{u}(\overline{f}_D;\ v_p) = -\frac{\overline{f}_D\, df_p}{2v_p}$$

Beziehungsweise

$$\triangle \overline{f}_D(\overline{u};\ v_p) = -\frac{2v_p}{df_p}\, \overline{u}$$

Entsprechend wird jede einzelne Zeile bzw. Spalte mittels der Fouriertransformation verschoben. In weiteren Ausführungsbeispielen kann jedoch auch eine beliebige andere Transformation gefunden werden, um die Messdaten in eine Matrix niedrigen Ranges umzuformen.

Im Folgenden wird die Fokussierung auf $\overline{u} = 0$ verwendet. Der gezeigte Ansatz lässt sich jedoch ohne Weiteres auf die Variante $\overline{f}_D = 0$ anwenden. In kompakter Form lässt sich das oben hergeleitete Messmodel angeben als

$$y = A(\boldsymbol{L}; v_p) + \boldsymbol{n}$$

wobei $\boldsymbol{L} \in \mathbb{C}^{N_u\times N_D}$ eine Matrix niedrigen Ranges welche die fokussierte Radar-Szene darstellt und $A$: $\mathbb{C}^{N_u\times N_D} -> \mathbb{C}^m$ der sogenannte Clutter-Fokus-Operator ist. Dieser lässt sich als Kombination des inversen Clutter-Shift-Operators $D^{-1}(\boldsymbol{X};\ v_p) = \mathbb{C}^{N_u\times N_D} -> \mathbb{C}^{N_u\times N_D}$ und der oben eingeführten Radarmessgleichungen angeben als

$$A(\boldsymbol{L}; v_p) = vec\left(\boldsymbol{A}D^{-1}(\boldsymbol{L}; v_p)\boldsymbol{B}^T\right)$$

Der inverse Clutter-Shift-Operator ist

$$D^{-1}(\boldsymbol{X};\ v_p) = \boldsymbol{F}_1\left(\boldsymbol{U}_\triangle^*(v_p) \odot (\boldsymbol{F}_1^{-1}\boldsymbol{X})\right)$$

wobei $\cdot^*$ die komplexe Konjugation, $\odot$ das Hadamard-Produkt, F1 eine diskrete Fouriertransformationsmatrix bezüglich der $\overline{u}$ Dimension und

$$\boldsymbol{U}_\triangle(v_p) = \exp\left(j2\pi\boldsymbol{n}_{\overline{u}}\overline{\boldsymbol{u}}_\triangle^T(v_p)\right)$$

die Fourier-Shift-Matrix mit

$$\boldsymbol{n}_{\overline{u}} = [0, 1, \ldots, N_u - 1]^T$$

$$\overline{\boldsymbol{u}}_\triangle(v_p) = \left[\triangle \overline{u}(i/N_D;\ v_p)\right]_{i=-N_D/2}^{N_D/2-1}$$

bezeichnet. Der gesuchte Parameter $v_p$ wird nun mittels des Minimierungsproblems

$$\widehat{v_p} = \arg\min_{L,v_p} \lambda \|L\|_* + h(L; v_p)$$

geschätzt, wobei $\|.\|_*$ die Nuklearnorm, $\lambda > 0$ einen Regularisierungsparameter und

$$h(L; v_p) = \|y - A(L; v_p)\|_2^2$$

den Residualterm bezeichnet. Dieses Minimierungsproblems kann über geeignete Algorithmen gelöst werden. Beispielsweise kann dafür ein Gradientenverfahren verwendet werden, welches mittels der iterativen Prozedur

$$L_i = TSVT(L_{i-1})$$

$$v_{p,i} = v_{p,i-1} - \mu_i \nabla_v h(L_i; v_{p,i-1})$$

eine Lösung findet, wobei i den Iterationsindex, TSVT(L) einen Iterationsschritt des turbo singular value thresholding (TSVT) Algorithmus, $\mu_i$ eine Schrittweite und

$$\nabla_v h(L; v_p) = 2Re\left\{A(L; v_p) - y)^H \frac{\partial A(L; v_p)}{\partial v_p}\right\}$$

$$\frac{\partial A(L; v_p)}{\partial v_p} = vec\left(-j2\pi AF_1\left(\left(n_{\overline{u}} \frac{\partial \overline{u}_\triangle^T(v_p)}{\partial v_p}\right) \odot U_\triangle^* v_p \odot F_1^{-1} L\right) B^T\right)$$

$$\frac{\partial \overline{u}_\triangle(v_p)}{\partial v_p} = \left[\frac{i/N_D df_p}{2v_p^2}\right]_{i=-N_D/2}^{N_D/2-1}$$

den Gradienten des Residualterms bezüglich $v_p$ bezeichnet. Anstatt von TSVT kann auch der Standardalgorithmus singular value thresholding (SVT) oder davon abgeleitete Verfahren verwendetwerden. Die Schrittweite kann über ein Levenberg-Marquardt (LM) Verfahren bestimmt werden. Prinzipiell kann die Minimierung auf beliebige Art und Weise zu erfolgen.

Ist das Minimierungsproblem gelöst, ist der optimale Parameter gefunden, denn dieser wurde so lange variiert, bis die Nuklearnorm als Ähnlichkeitsmaß minimal geworden ist.

Das Minimierungsproblems kann in weiteren Ausführungsbeispielen anstatt mit der Nuklearnorm auch mit äquivalenten Maßen formuliert werden. Beispielsweise könnte eine Approximation der Rang-Funktion als Ähnlichkeitsmaß verwendet werden. Ebenfalls könnte das angegeben Gütekriterium auch mittels eines alternativen Minimierungsalgorithmus gelöst werden. Die Schrittweite könnte über andere Methoden als einem LM Ansatz bestimmt werden.

Optional kann in einer Erweiterung des Verfahrens die Schätzung des Parameters noch weiter verbessert werden. Die vorhin genannten zyklischen Verschiebungen in $\overline{u}$ und $\overline{f}_D$ in der Radar-Szene bzw. im Winkel- Doppler Domäne entsprechen einer zyklischen Verschiebung in der Zeit- bzw. Raumdimension in der Messmatrix **Y.** Im Falle einer Fokussierung auf $\overline{u} = 0$ werden die Messdaten entlang der Zeitdimension aneinander ausgerichtet bzw. bei einer Fokussierung in $\overline{f}_D = 0$ entlang der Kanäle. Entsprechend der Ground Moving Target Indication (GMTI) Geometrie gibt es jedoch Messungen, welche nicht "vollständig" bzw. wo es keine dazu ähnlichen Messungen gibt. GMTI bezeichnet die Detektion von sich relativ zur Erdoberfläche bewegenden Zielen von einem Flugzeug- oder Satelliten-getragen mehrkanaligen Radarsystem aus.

Dies liegt daran, dass sich das Radarsystem, relativ zur Oberfläche bewegt, während die Mehrzahl der Messungen erzeugt wird. Dadurch haben Messungen am Anfang eines CPI Echos von Bereichen der Radarszene (z.B. der Oberfläche des Erdbodens), die in den der Messungen am Ende eines CPI kein Echo mehr liefern. Diese haben dafür Echos von anderen Oberflächenbereichen in Bewegungsrichtung des Radarsystems. Da die Optimierung darauf basiert, dass angenommen wird, alle Kanäle des Radarsystems erhalten Echos von demselben Hintergrund, kann ein Entfernen von Messungen, bei denen diese Annahme nicht erfüllt ist, die Qualität das Kalibrierung möglicherweise erhöhen.

Zusätzlich werden aufgrund der zyklischen Eigenschaft der Fourier-shift Matrix in der Verbesserten Matrixdarstellung Messungen insoweit unvollständig, als deren Matrixeinträge von einem Rand der Matrix an den anderen Rand der Matrix verschoben werden, wo sich Matrixeinträge einer anderen Messung befinden, sodass diese Kombination von Messwerten aus unterschiedlichen Messungen bei der Berechnung der Nuklearnorm verwendet wird, was deren Aussagekraft schwächt. Messungen, für die dies der Fall ist, werden nachfolgend als unvollständige Messungen bezeichnet.

Dieser Sachverhalt ist in Abb. 3 illustriert, wobei die Abb. 3a den Verlauf der korrelierten Raum-Zeit-Messdaten in $\mathbf{Y}$ vor der Fokussierung und Abb. 3b den Verlauf nach der Fokussierung auf $\bar{u} = 0$ zeigt. Durchgezogene Linien kennzeichnen Messdaten, die vollständig vorhanden sind und gestrichelte bzw. gepunktete Linien unvollständige Messdaten. Nach der Fokussierung sind an den Rändern Dreiecke dieser unvollständigen Messdaten vorhanden. Diese Messungen verschlechtern die Schätzgenauigkeit und werden in einer optionalen Erweiterung des Verfahrens zunächst zu Null gesetzt. Das heißt, die von nicht vollständigen Messungen werden aus der verbesserten Darstellung entfernt. Dies bedingt eine Verjüngung des Minimums in der Nuklearnorm $\|.\|_*$ was einhergeht mit einer erhöhten Schätzgenauigkeit des Parameters $v_p$. Die Breite dieser Dreiecke in Pulsen kann mittels

$$n_{tr}(v_p) \simeq 2 \left\lfloor \frac{N_{rx} d f_p}{2 v_p} \right\rfloor$$

abgeschätzt werden, wobei $\lfloor \cdot \rfloor$ die Abrundungsfunktion bezeichnet. Um die nicht redundanten Teile zu Null zu setzen wird der sogenannte Schneideoperator C: $\mathbb{C}^{N_{rx} \times N_p} \longrightarrow \mathbb{C}^{N_{rx} \times N_p}$ definiert als

$$C(\mathbf{Y}; v_p) = \mathbf{Z}(v_p) \odot \mathbf{Y}$$

Wobei

$$\mathbf{Z}(\beta) = \left[ \mathbf{0}_{N_{rx} \times n_{tr}(v_p)/2} \, \mathbf{1}_{N_{rx} \times (N_p - n_{tr}(v_p))} \, \mathbf{0}_{N_{rx} \times n_{tr}(v_p)/2} \right]$$

eine Matrix aus Null- und Einser-Blockmatrizen ist. Da der Schneideoperator ebenfalls von dem gesuchten Parameter $v_p$ abhängt wird der Schätzalgorithmus um eine äußere Schleife erweitert. In dieser wird zuerst $\beta$ wie oben erläutert geschätzt, danach wird der Schneideoperator $C(\mathbf{Y}; v_p)$ auf die Messdaten angewandt und schließlich $v_p$ mittels der beschnittenen Daten $\mathbf{y}_s = vec(C(\mathbf{Y}; v_p))$ erneut geschätzt. Das Schneiden und Schätzen kann beispielsweise so lange wiederholt werden, bis sich keinerlei Änderung in $v_p$ mehr ergibt und dieser Parameter als optimal geschätzt gelten kann.

Wie bereits erwähnt kann das einfache Beispiel, dass lediglich die Plattformgeschwindigkeit als zu schätzenden Parameter enthält, leicht auf mehrere Parameter verallgemeinert werden. Das Verfahren könnte beispielsweise durch Anpassung des Modells um fehlerhafte Positionen der Phasenzentren $\triangle \vec{p}_{nrx}$, Roll-, Nick-, und Gierwinkel, sowie diverser Parameter für einen Kanalabgleich etc. erweitert werden.

Wie teilweise bereits erwähnt weisen die Ausführungsbeispiele der hierin beschriebenen Verfahren mehrere Vorzüge auf. Durch die Verwendung der Nuklearnorm ist das Gütekriterium bzw. das Ähnlichkeitsmaß robust gegen sich in den Messdaten befindliche Bewegtziele. Des Weiteren erlaubt dieser Ansatz die Schätzung der nötigen Parameter direkt aus und für ein einzelnes Entfernungsintervall, welches getestet werden soll. Im Gegensatz zu etablierten Verfahren werden keine benachbarten Entfernungsintervalle als Trainingsdaten benötigt. Es existieren daher keine Voraussetzungen an die Radar-Szene wie etwa, dass diese einen homogen verteilten Hintergrund aufweist und frei von Bewegtzielen ist. Dadurch ist dieses Verfahren für heterogen verteilte und belebte Radar-Szenen geeignet.

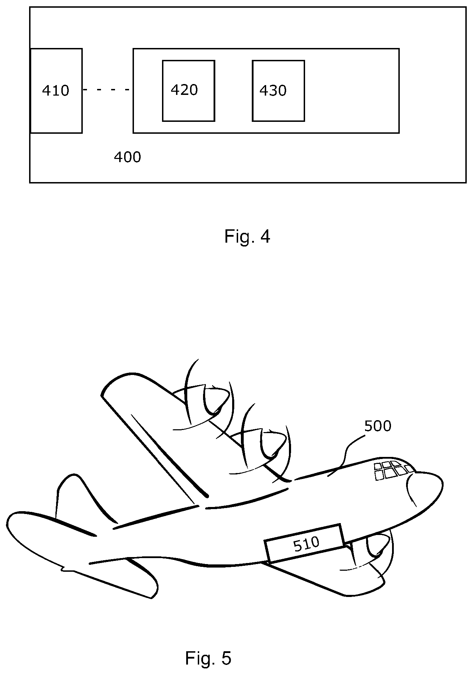

Fig. 4 zeigt eine schematische Darstellung einer Vorrichtung 400 zum Kalibrieren zumindest eines Parameters eines Radarsystems.

Diese umfasst eine Eingangsschnittstelle 410 zum Empfangen einer Mehrzahl von Messungen einer Radarszene und eine Optimierungsschaltung 420. Die Optimierungsschaltung ist ausgebildet zum Transformieren 430 der Mehrzahl von Messungen in eine von dem Parameter abhängige Darstellung und zum Variieren des Parameters 440, bis eine Korrelation zumindest eines Messwertes zwischen der Mehrzahl von Messungen eine größtmögliche Korrelation aufweist. Da die Vorrichtung 400 das bereits eingehend beschriebene Verfahren durchführt, wird auf eine erneute detaillierte Beschreibung desselben verzichtet.

Fig. 5 zeigt eine schematische Darstellung eines Ausführungsbeispiels eines Luftfahrzeugs 500 mit einem mobilen Radargerät 510. Um die Messungen durchführen zu können, umfasst das mobile Radargerät ein Radar-Frontend. Die Auswertung der Messungen erfolgt unter anderem mit einer Vorrichtung 400 zum Kalibrieren zumindest eines Parameters eines Radarsystems, um für beliebige Radarszenen effizient eine Kalibration des mobilen Radargerätes 510 zu ermöglichen.

Während in den vorhergehenden Abschnitten ein konkretes Beispiel für die Anwendung eines Ausführungsbeispiels eines Verfahrens für eine fliegende Radarplattform gegeben wurde, kann ein solches Verfahren auch für alle anderen Radarsysteme eingesetzt werden. Beispielsweise kann ein Ausgangsbeispiel eines Kalibrationsverfahrens auch für statische Radarsysteme oder für Synthetic Aperture Radar Systeme (SAR) verwendet werden. Ebenso ist die Anwendung in einem GMTI System möglich.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann.

**Patentansprüche**

1. Verfahren zum Kalibrieren zumindest eines Parameters eines Radarsystems, umfassend:

   Empfangen (110) einer Mehrzahl von Messungen einer Radarszene;
   Transformieren (120) der Mehrzahl von Messungen in eine von dem Parameter abhängige Darstellung; und
   Variieren des Parameters (130), um einen verbesserten Parameter zu erhalten, mit dem eine verbesserten Darstellung der Mehrzahl von Messungen eine minimale Nuklearnorm hat.

2. Verfahren nach Anspruch 1, wobei das Transformieren das Auswählen eines einzigen Entfernungsintervalls einer Vielzahl von Entfernungsintervallen der Messungen umfasst.

**3.** Verfahren nach Anspruch 1 oder 2, ferner umfassend:
repräsentieren der Mehrzahl von Messungen derart, dass eine erste Dimension der Repräsentation und eine zweite Dimension der Repräsentation jeweils einer Information aus der Gruppe Richtungsinformation der Messungen, Geschwindigkeitsinformation der Messungen und Entfernungsinformation der Messungen entspricht.

**4.** Verfahren nach Anspruch 3, ferner umfassend:
Entfernen von nicht vollständigen Messungen aus der verbesserten Darstellung.

**5.** Verfahren nach Anspruch 4, ferner umfassend:
variieren des verbesserten Parameters, um einen weiter verbesserten Parameter zu erhalten, mit dem eine weiter verbesserten Darstellung der Mehrzahl von Messungen ein minimale Nuklearnorm hat.

**6.** Verfahren nach einem der vorhergehenden Ansprüche, wobei der zumindest eine Parameter ein Parameter aus der Gruppe Relativgeschwindigkeit zwischen Radarszene und Radarsystem, relative Orientierung zwischen Radarszene und Radarsystem, Position des Phasenzentrums zumindest einer Radarantenne und ein komplexwertiger Faktor zum Kanalabgleich ist.

**7.** Vorrichtung (400) zum Kalibrieren zumindest eines Parameters eines Radarsystems, umfassend:

Eine Eingangsschnittstelle (410) zum Empfangen einer Mehrzahl von Messungen einer Radarszene;
Eine Optimierungsschaltung (420), die ausgebildet ist, zum:

Transformieren (430) der Mehrzahl von Messungen in eine von dem Parameter abhängige Darstellung; und
Variieren des Parameters (440), um einen verbesserten Parameter zu erhalten, mit dem eine verbesserten Darstellung der Mehrzahl von Messungen eine minimale Nuklearnorm hat.

**8.** Ein mobiles Radargerät (510), umfassend:

Ein Radar-Frontend zum Erzeugen einer Mehrzahl von Messungen einer Radarszene; und
eine Vorrichtung gemäß Anspruch 7.

**9.** Luft- oder Raumfahrzeug (500) mit einem mobilen Radargerät (510) gemäß Anspruch 8.

**10.** Computerprogramm mit einem Programmcode, der beim Ausführen auf eine programmierbaren Hardwarekomponente ein Durchführen des Verfahrens gemäß einem der Patentansprüche 1 bis 6 bewirkt.


**Claims**

**1.** A method for calibrating at least one parameter of a radar system, comprising:

receiving (110) a plurality of measurements of a radar scene;
transforming (120) the plurality of measurements into a representation dependent on the parameter; and
varying the parameter (130) to obtain an improved parameter with which an improved representation of the plurality of measurements has a minimum nuclear norm.

**2.** The method of claim 1, wherein transforming comprises selecting a single distance interval of a plurality of distance intervals of the measurements.

**3.** The method of claim 1 or 2, further comprising:
representing the plurality of measurements such that a first dimension of the representation and a second dimension of the representation each correspond to one information from the group consisting of direction information of the measurements, velocity information of the measurements, and distance information of the measurements.

**4.** The method of claim 3, further comprising:
removing incomplete measurements from the improved representation.

**5.** The method of claim 4, further comprising:

varying the improved parameter to obtain a further improved parameter with which a further improved representation of the plurality of measurements has a minimum nuclear norm.

6. The method of any one of the preceding claims, wherein the at least one parameter is a parameter from the group consisting of relative velocity between radar scene and radar system, relative orientation between radar scene and radar system, position of the phase center of at least one radar antenna, and a complex-valued factor for channel balancing.

7. An apparatus (400) for calibrating at least one parameter of a radar system, comprising:

an input interface (410) for receiving a plurality of measurements of a radar scene;
an optimization circuit (420) configured to:

transform (430) the plurality of measurements into a representation dependent on the parameter; and
vary the parameter (440) to obtain an improved parameter with which an improved representation of the plurality of measurements has a minimum nuclear norm.

8. A mobile radar device (510), comprising:

a radar front end for generating a plurality of measurements of a radar scene; and
an apparatus according to claim 7.

9. An aircraft or spacecraft (500) having a mobile radar device (510) according to claim 8.

10. A computer program having a program code which, when executed on a programmable hardware component, causes the method according to any one of claims 1 to 6 to be carried out.

**Revendications**

1. Procédé pour calibrer au moins un paramètre d'un système radar, comprenant le fait de :

recevoir (110) une pluralité de mesures d'une scène radar ;
transformer (120) la pluralité de mesures en une représentation dépendante du paramètre ; et
faire varier le paramètre (130) afin d'obtenir un paramètre amélioré avec lequel une représentation améliorée de la pluralité de mesures a une norme nucléaire minimale.

2. Procédé selon la revendication 1, dans lequel la transformation comprend le fait de sélectionner un seul intervalle de distance parmi une pluralité d'intervalles de distance des mesures.

3. Procédé selon la revendication 1 ou 2, comprenant en outre le fait de :
représenter la pluralité de mesures de telle sorte qu'une première dimension de la représentation et une deuxième dimension de la représentation correspondent respectivement à une information parmi le groupe comprenant une information de direction des mesures, une information de vitesse des mesures et une information de distance des mesures.

4. Procédé selon la revendication 3, comprenant en outre le fait de :
retirer des mesures non complètes de la représentation améliorée.

5. Procédé selon la revendication 4, comprenant en outre le fait de :
faire varier le paramètre amélioré afin d'obtenir un paramètre encore amélioré avec lequel une représentation encore améliorée de la pluralité de mesures a une norme nucléaire minimale.

6. Procédé selon l'une des revendications précédentes, dans lequel l'au moins un paramètre est un paramètre parmi le groupe comprenant la vitesse relative entre la scène radar et le système radar, l'orientation relative entre la scène radar et le système radar, la position du centre de phase d'au moins une antenne radar et un facteur à valeur complexe pour l'alignement de canaux.

**7.** Dispositif (400) pour calibrer au moins un paramètre d'un système radar, comprenant :

une interface d'entrée (410) pour recevoir une pluralité de mesures d'une scène radar ;
un circuit d'optimisation (420) qui est configuré pour :

transformer (430) la pluralité de mesures en une représentation dépendante du paramètre ; et
faire varier le paramètre (440) afin d'obtenir un paramètre amélioré avec lequel une représentation améliorée de la pluralité de mesures a une norme nucléaire minimale.

**8.** Appareil radar mobile (510) comprenant :

un front-end radar pour générer une pluralité de mesures d'une scène radar ; et
un dispositif selon la revendication 7.

**9.** Aéronef ou véhicule spatial (500) présentant un appareil radar mobile (510) selon la revendication 8.

**10.** Programme d'ordinateur présentant un code de programme qui, lorsqu'il est exécuté sur un composant matériel programmable, provoque l'exécution du procédé selon l'une des revendications 1 à 6.

Empfangen einer Mehrzahl
von Messungen
einer Radarszene
— 110

Transformieren der
Mehrzahl von Messungen in
parameterabhängige Darstellung
— 120

Variieren eines Parameters
bis ein Ähnlichkeitsmaß
größtmöglich ist
— 130

Fig. 1

(a)

(b)

(c)

Fig. 2

(a)

(b)

Fig. 3

Fig. 4

Fig. 5

**EP 4 231 052 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3364212 A1